# EUROPEAN PATENT APPLICATION

(11) **EP 1 480 383 A2**
(43) Date of publication of application: **24.11.2004**
(21) Application number: 04300295.5
(22) Date of filing: 18.05.2004
(51) Int. Cl.: H04L 12/24

(54) **Network management controlled network backup server**

(30) Priority: 21.05.2003 US 442235
(71) Applicant: ALCATEL, 75008 Paris (FR)
(72) Inventor: Elkady, Amr, Ottawa Ontario K2H 9A9 (CA); Jansen, Arnold, Ottawa Ontario K1Y 4A4 (CA)
(74) Representative: Feray, Valérie

(57) **Abstract**

A communication network having a network management system with a backup server adapted to create backup schedule for new nodes or nodes leaving the system. The new nodes are added when the network manager informs the backup server of the new node or the removal of a node from the system and requests that a backup schedule be created therefor. The backup schedule created for the new node is based on current backup policy.

## Description

### BACKGROUND AND BRIEF DESCRIPTION OF THE INVENTION

The present invention solves the problem of backing up the databases of network elements which contain node information and configuration information.

Today, node information backup is being done manually, mostly at night by operators using independent systems to track nodes of the network and to backup their databases. In doing this, the operators need to keep track of every addition/removal/address change made to the network. Besides being error-prone, this tracking effort is time-consuming, and therefore network operating costs could be reduced if this back-up process could be improved.

Prior art solutions are to (1) independently backup the network nodes' databases either manually, or (2) through the element management software. Both ways require that operators track each node separately and manually backup its database.

The present invention solves the following problems which exist with the prior art:
1. The Network management software's knowledge of the network is not utilized.
2. Adding/removing address changes for nodes on the network have to be tracked manually by operators to manually backup these nodes. This method is error-prone and time-consuming, hence costly.
3. Network backup is a significantly large task already. However, it will grow even larger as the size, features and services of networks expand. Therefore, the inadequacies of today's backup procedures will become even more acute in the future.

### THE PRESENT INVENTION

An object of the invention is to reduce network operating costs and improve network reliability. The invention provides these advantages by automating the procedure of backing up the databases of network node elements, a procedure that is currently done manually and one that is time-consuming and error-prone.

According to the invention, an independent network backup server that is controlled by the network management server is provided. Then, as new nodes are added and discovered in the network, or nodes removed, the network management informs the backup server of the new node and supplies the backup server with immediate information to contact the new node or newly discovered node, or nodes removed. The backup server creates a backup schedule based on the network backup policy and preset backup frequency. At the given scheduled times, the backup server automatically contacts and reconciles the nodes, saving the entire nodes' database and configuration information.

In case of a disaster recovery, the backup server can restore this information back to the node. The network management software then keeps the backup server updated with the network nodes' changes of addresses, passwords, existence, accessibility, etc.

### BRIEF DESCRIPTION OF THE DRAWINGS

The above and other objects, advantages and features of the invention will become more apparent when considered with the accompanying specification and attached drawing wherein:
Figure 1 is a schematic diagram of a network management system incorporating and illustrating the invention, and
Figure 2 is a flow chart diagram of one embodiment of a node backup system incorporating the invention.

### DETAILED DESCRIPTION OF THE INVENTION

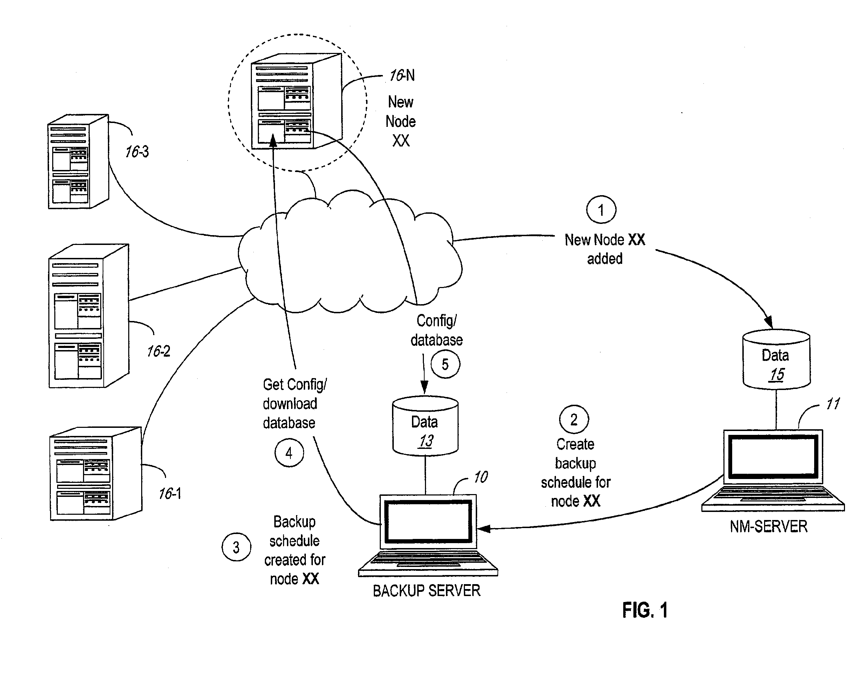

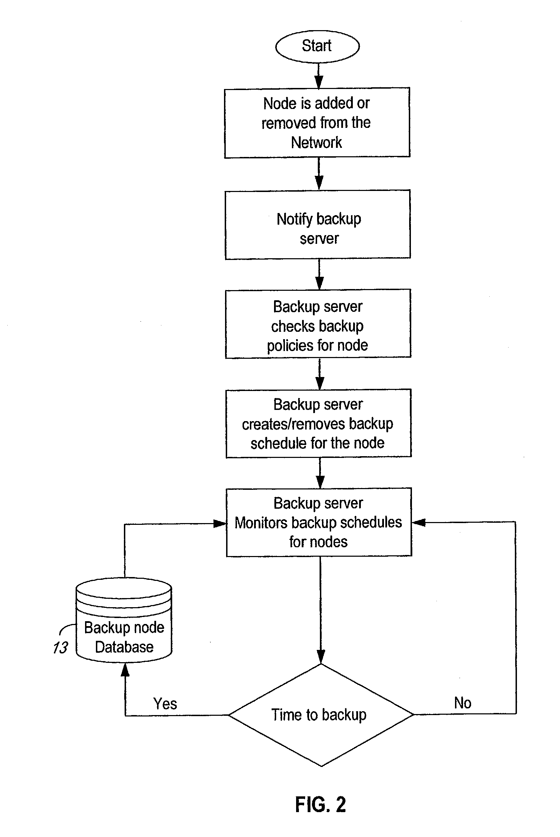

Referring to Figures 1 and 2, the invention provides an independent network element backup server 10 that is controlled by the Network management server 11. Backup server 10 is provided with a configuration database 13 while the network management server 11 is provided with its own database 15. The steps for backup happen as follows:
1. As new nodes 16N are added (to existing nodes 16-1, 16-2, 16-3, etc.) and/or discovered in the network, the network management software informs the backup server 10 of the new node 16, and supplies the backup server with the needed information "XX" to contact this node.
2. The backup server creates a backup schedule based on the network backup policy and preset backup frequency.
3. At the given scheduled times, the backup server 10 automatically contacts and reconciles the node saving the entire node's database and configuration information.
4. In case of a disaster recovery, the backup server 10 can restore this information back to the node.
5. The NM software keeps the backup server 10 updated with the network nodes' change of addresses, passwords, existence, accessibility. etc.

Referring again to the drawings, note the following:
? A new node 16N is added (an existing node is removed from) to the network.
? The network manager 11 informs the backup server 10 of the new node and requests a backup schedule to be created.
? A backup schedule is created for the new node 16N based on the applied backup policy.
? At the given times, the backup server 10 reconciles the node information.

In case any node suffers a major loss of data and configuration, the backup server 10 can restore the node to the latest known good configuration from the backups.

The advantages of the invention include the following:

Network backup becomes an automated task that is automatically aware of network changes, and is therefore less error-prone and less costly than manual backup procedures of the prior art.

The timing and frequency of backups can easily be controlled to meet backup requirements of a network and its nodes, e.g. as may be required by network policies or service agreements.

Reducing network operating costs and improving network reliability are important features. This invention provides these advantages by automating the procedure of backing up the databases of network elements, a procedure that is currently done manually, and one that is time-consuming and error-prone. Since these advantages will make network management solutions more competitive, it will be very desirable.

The invention distinguishes from the prior art by the automated nature of the backup procedure, specifically, the steps and means necessary for the backup servers 10 to be updated with network changes and contact and backup each node according to a backup schedule.

Summarizing the invention, it provides a method and apparatus of backing up nodal information for nodes in a communications network onto a backup system in the communications network. It includes the steps of the backup system accessing a backup schedule that specifies contact information for the node and a scheduled time in which the nodal information is to be backed up. Then the backup system automatically contacts the node upon the occurrence of the scheduled time, and the backup system automatically retrieves the nodal information from the node and stores the information on the backup system. In addition, it includes the steps of discovering a new node in the communications network and informing the backup system of the new node and contact information for the new node. Also, when a change to a policy affecting the node is made, the method further comprises the step of the backup system modifying the backup schedule in accordance with the policy change. The apparatus includes a communications network having a network management system 11, a backup server system 10 and a plurality of nodes 16 with the network management system, the backup system being adapted to carry out the method described above.

While the invention has been described in relation to preferred embodiments of the invention, it will be appreciated that other embodiments, adaptations and modifications of the invention will be apparent to those skilled in the art.

## Claims

1. A method of backing up nodal information from a node in a communications network onto a backup system in the communications network having a network management server and associated network management software, comprising the steps of:
(a) providing an independent backup server and coupling said independent backup server to the network management server,
(b) causing said backup system to access a backup schedule that specifies contact information for said node and a scheduled time at which said nodal information is to be backed up;
(c) causing said backup system to automatically contact said node upon the occurrence of said scheduled time; and
(d) causing said backup system to automatically retrieve said nodal information from said node and storing the nodal information on said backup system.

2. The method of claim 1 wherein the communications network further includes a network management system, and the method further comprises the steps of said network management system discovering a new node in said communications network and informing the backup system of the new node and contact information for the new node.

3. The method of claim 2, further comprising the step of said backup system modifying the backup schedule to include the new node.

4. The method of claim 1 wherein a change to a policy affecting the node is made, and the method further comprises the step of the backup system modifying the backup schedule in accordance with the policy.

5. The method of claim 2 wherein when a change to a policy affecting the node is made, and the method further comprises the step of the backup system modifying the backup schedule in accordance with the change to policy.

6. The method of claim 3 wherein a change to a policy affecting the node is made, and the method further comprises the step of the backup system modifying the backup schedule in accordance with the policy.

7. A communications network having a network management system, the improvement comprising: a backup server, said backup server being adapted to create a backup schedule for all nodes including a new node, said new node being added when said network manager informs the backup server of the new node and requests the backup schedule be created therefor, said backup schedule being created for the new node based on the applied backup policy.

8. The communications network defined in claim 7 wherein said backup server is adapted in case of the node suffering a major loss of data and configuration, said backup server can restore the node's good configuration from said backup server.
